# EUROPEAN PATENT APPLICATION

(11) **EP 4 542 427 A1**
(43) Date of publication of application: **23.04.2025**
(21) Application number: 24151964.4
(22) Date of filing: 15.01.2024
(51) Int. Cl.: G06F 21/62, G06F 40/30, G06N 3/08

(54) **GPT MODEL-BASED SMART DEVICE INTERACTION METHOD, APPARATUS, AND SYSTEM**

(30) Priority: 19.10.2023 CN 202311364030
(71) Applicant: Zhejiang LNGIN Holographic Technology Co., Ltd., Hangzhou, Zhejiang 310052 (CN)
(72) Inventor: Tang, Zhengwei, Hangzhou, Zhejiang, 310052 (CN); Xu, Min, Hangzhou, Zhejiang, 310052 (CN)
(74) Representative: 2s-ip Schramm Schneider Bertagnoll Patent- und Rechtsanwälte Part mbB

(57) **Abstract**

Disclosed are a GPT model-based smart device interaction method, apparatus, and system; the smart device side performs desensitization to the original interactive information to obtain user interactive information, and transmits the user interactive information together with user preference information to the proxy layer; the prompt proxy processes the user interactive information to obtain post-processed interactive information and then transmits the post-processed interactive information to a GPT model, so that the GPT model performs intent recognition and task breakdown based on the post-processed interactive information and returns task handling information with respect to the post-processed interactive information; the response proxy, upon receipt of the concerned information, fuses the user preference information and the task handling information to obtain interactive response information, and then transmits the interactive response information to the smart device side; the smart device side remediates the interactive response information based on user private data and responds to the user based on the remediated information; in this way, the disclosure enhances response accuracy while ensuring that the user private data are only kept at the smart device side, so that security of user privacy is guaranteed.

## Description

### FIELD

This disclosure relates to human-computer interaction technologies, and more particularly relates to a GPT model-based smart device interaction method, apparatus, and system.

### BACKGROUND

Presently, smart devices have become ubiquitous in daily life. To devices such as smart speakers and vehicle-mounted devices, human-computer interaction is a critical feature. However, existing smart devices still face various problems and challenges in their interactive systems. Firstly, traditional interactive ways cannot satisfy people's demands on more natural-sounding and intelligent interactions. Secondly, due to hardware limitations, a high-quality digital human (i.e., virtual human) cannot be rendered on a traditional smart device. Furthermore, although GPT (Generative Pre-Trained Transformer) model-based large language models deployed on cloud enable digital humans to provide personalized services, they also bring issues in data security and privacy. In the course of real-time uploading and analyzing user data, there is a need for a solution to realize more accurate interactivity while guaranteeing data security and protecting user privacy.

### SUMMARY

The disclosure provides a GPT model-based smart device interaction method, apparatus, and system, so as to overcome drawbacks in conventional technologies, such as contradiction between interactive effect and smart device system complexity, and breach of user privacy when providing personalized services.

The disclosure provides a GPT model-based smart device interaction method, comprising:
receiving user interactive information and user preference information transmitted from a smart device side, the user interactive information being information desensitized by the smart device side with respect to original interactive information inputted by a user;
transmitting, after processing the user interactive information to obtain post-processed interactive information, the post-processed interactive information to a GPT model, so that the GPT model returns task handling information with respect to the post-processed interactive information; and
fusing, upon receipt of the task handling information returned from the GPT model, the user preference information and the task handling information to obtain interactive response information, and transmitting the interactive response information to the smart device side, so that the smart device side remediates the interactive response information based on user private data included in the user interactive information and provides a response to the user based on remediated information.

According to the GPT model-based smart device interaction method provided by the disclosure, the fusing the user preference information and the task handling information to obtain interactive response information specifically comprises:
matching between respective nouns in the task handling information and respective preference labels in the user preference information to obtain the preference labels matching the respective nouns in the task handling information; and
replacing, based on label values of the preference labels matching the respective nouns in the task handling information, corresponding nouns in the task handling information to obtain the interactive response information; wherein the smart device side, upon receipt of the interactive response information, remediates the interactive response information based on the user private data included in the user interactive information to obtain remediated handling information and executes the remediated handling information to implement the response to the user.

According to the GPT model-based smart device interaction method provided by the disclosure, the transmitting the post-processed interactive information to a GPT model specifically comprises:
vectorizing the post-processed interactive information to obtain a post-processed interactive vector;
searching, based on the post-processed interactive vector, in knowledge bases of respective domains to determine domain knowledge matching the post-processed interactive vector from within the knowledge bases of the respective domains and a domain knowledge vector of the matching domain knowledge; and
concatenating the post-processed interactive vector and the domain knowledge vector of the matching domain knowledge to obtain a fused query vector, and transmitting the fused query vector to the GPT model.

According to the GPT model-based smart device interaction method provided by the disclosure, the transmitting the fused query vector to the GPT model specifically comprises:
transmitting the fused query vector to a plurality of GPT models to obtain task handling information returned from the plurality of GPT models with respect to the post-processed interactive information; and
fusing or filtering the task handling information returned from the plurality of GPT models with respect to the post-processed interactive information to obtain optimized handling information, the optimized handling information being fused with the user preference information to obtain the interactive response information.

According to the GPT model-based smart device interaction method provided by the disclosure, the proxy layer is constructed by:
building an initial model based on a pre-trained text generation model;
inputting sample input information to the initial model to obtain test output information outputted by the initial model; and
finely tuning the initial model based on a score of the test output information or based on a difference between the test output information and the sample output information, thereby obtaining the proxy layer.

The disclosure further provides a GPT model-based smart device interaction method, comprising:
receiving original interactive information inputted by a user, and desensitizing the original interactive information to obtain user interactive information;
transmitting the user interactive information and the user's user preference information to a proxy layer, so that the proxy layer transmits, after processing the user interactive information to obtain post-processed interactive information, the post-processed interactive information to a GPT model, whereby the GPT model returns task handling information with respect to the post-processed interactive information; and
receiving interactive response information transmitted from the proxy layer, remediating the interactive response information based on user private data included in the user interactive information, and providing a response to the user based on remediated information; wherein the interactive response information is obtained from fusing, by the proxy layer upon receipt of the task handling information returned from the GPT model with respect to the post-processed interactive information, the user preference information and the task handling information.

According to the GPT model-based smart device interaction method provided by the disclosure, the remediating the interactive response information based on user private data included in the user interactive information, and providing a response to the user based on remediated information, specifically comprises:
remediating the interactive response information based on the user private data included in the user interactive information to obtain remediated handling information, and executing the remediated handling information to implement a response to the user;
wherein the interactive response information is obtained by the proxy layer which, after performing matching between respective nouns in the task handling information and respective preference labels in the user preference information to obtain the preference labels matching the respective nouns in the task handling information, replaces corresponding nouns in the task handling information based on label values of the preference labels matching the respective nouns in the task handling information.

According to the GPT model-based smart device interaction method provided by the disclosure, the method further comprises:
collecting a plurality of pieces of original interactive information inputted by the user and corresponding remediated information, and recording the original interactive information, which corresponds to the remediated information not meeting the user's expectation, as a directed to-be-optimized sample;
performing intent recognition with respect to the directed to-be-optimized sample to obtain a user intent corresponding to the directed to-be-optimized sample, and setting, based on the user intent, a type label for a concerned text associated with the user intent in the directed to-be-optimized sample;
performing word segmentation to the concerned text to obtain a keyword of the concerned text, and searching, based on the keyword of the concerned text and the type label of the concerned text, in knowledge bases of respective domains to obtain domain knowledge matching the concerned text;
establishing an association relationship between the concerned text and the domain knowledge matching the concerned text, so that after a same user inputs original interactive information identical to the directed to-be-optimized sample again, searching is performed, based on post-processed interactive vector of the post-processed interactive information corresponding to the original interactive information, in the knowledge bases of respective domains, wherein the domain knowledge matching the concerned text is determined as the domain knowledge matching the corresponding post-processed interactive vector; or, a response to the original interactive information is provided based on the domain knowledge matching the concerned text.

According to the GPT model-based smart device interaction method provided by the disclosure, the method further comprises:
obtaining feedback information inputted by the user with respect to the response and collecting an image of the user when inputting the feedback information;
performing emotion recognition with respect to the feedback information to obtain an emotion type of the feedback information;
performing expression recognition with respect to the image of the user when inputting the feedback information to obtain an expression type of the user when inputting the feedback information;
determining, in a case that the feedback information includes a negative keyword, the emotion type of the feedback information is a negative emotion, or the expression type of the user when inputting the feedback information is a negative expression, that an interaction barrier occurs currently;
obtaining, in a case that the interaction barrier occurs currently, respective pieces of historical prompt-response information corresponding to the user, searching, in the respective pieces of historical prompt-response information, historical prompt-response information matching the original interactive information, and providing a response based on the historical prompt-response information matching the original interactive information.

According to the GPT model-based smart device interaction method provided by the disclosure, the method further comprises:
determining a current network status type, transmitting, in a case that the network status type is poor network connectivity or network outage, the user interactive information and the user's user preference information to a locally deployed local GPT model to obtain local response information returned from the local GPT model, and providing a response to the user based on the local response information.

According to the GPT model-based smart device interaction method provided by the disclosure, the local GPT model is obtained by performing quantized model compression to a sample GPT model.

The present disclosure further provides a GPT model-based smart device interaction method, comprising:
receiving, by a smart device side, original interactive information inputted by a user, and desensitizing the original interactive information to obtain user interactive information;
transmitting, by the smart device side, the user interactive information and the user's user preference information, to a proxy layer;
receiving, by the proxy layer, the user interactive information and the user preference information transmitted from the smart device side, processing the user interactive information to obtain post-processed interactive information, and then transmitting the post-processed interactive information to a GPT model, so that the GPT model returns task handling information with respect to the post-processed interactive information;
fusing, by the proxy layer, after receiving the task handling information returned from the GPT model with respect to the post-processing interactive information, the user preference information and the task handling information to obtain interactive response information, and transmitting the interactive response information to the smart device side; and
receiving, by the smart device side, the interactive response information transmitted from the proxy layer, remediating the interactive response information based on user private data included in the user interactive information, and providing a response to the user based on the remediated information.

The disclosure further provides a GPT model-based smart device interaction apparatus, comprising:
an information receiving unit configured to receive user interactive information and user preference information transmitted from a smart device side, the user interactive information being information desensitized by the smart device side with respect to original interactive information inputted by a user;
a prompt proxy configured to transmit, after processing the user interactive information to obtain post-processed interactive information, the post-processed interactive information to a GPT model, so that the GPT model returns task handling information with respect to the post-processed interactive information; and
a response proxy configured to fuse, upon receipt of the task handling information returned from the GPT model, the user preference information and the task handling information to obtain interactive response information, and transmit the interactive response information to the smart device side, so that the smart device side remediates the interactive response information based on user private data included in the user interactive information and provides a response to the user based on remediated information.

The disclosure further provides a GPT model-based smart device interaction apparatus, comprising:
an input processing unit configured to receive original interactive information inputted by a user, and desensitize the original interactive information to obtain user interactive information;
an information forwarding unit configured to transmit the user interactive information and the user's user preference information to a proxy layer, so that the proxy layer transmits, after processing the user interactive information to obtain post-processed interactive information, the post-processed interactive information to a GPT model, whereby the GPT model returns task handling information with respect to the post-processed interactive information; and
a response information providing unit configured to receive interactive response information transmitted from the proxy layer, remediate the interactive response information based on user private data included in the user interactive information, and provide a response to the user based on remediated information; wherein the interactive response information is obtained from fusing, by the proxy layer upon receipt of the task handling information returned from the GPT model with respect to the post-processed interactive information, the user preference information and the task handling information.

The disclosure further provides a GPT model-based smart device interaction system, comprising a proxy layer and a smart device side;
wherein on the proxy layer is deployed the GPT model-based smart device interaction apparatus corresponding to any proxy layer as described *supra;* and
on the smart device side is deployed the GPT model-based smart device interaction apparatus corresponding to any smart device side as described *supra.*

According to the GPT model-based smart device interaction method, apparatus, and system provided by the disclosure, the smart device side performs desensitization to the original interactive information inputted by a user to obtain user interactive information, and transmits the user interactive information together with user preference information to the proxy layer; the prompt proxy of the proxy layer processes the user interactive information to obtain post-processed interactive information and then transmits the post-processed interactive information to a GPT model, so that the GPT model performs intent recognition and task breakdown based on the post-processed interactive information and returns task handling information with respect to the post-processed interactive information; the response proxy, upon receipt of the task handling information returned from the GPT model with respect to the post-processed interactive information, fuses the user preference information and the task handling information to obtain interactive response information with respect to the user interactive information, and then transmits the interactive response information to the smart device side; next, the smart device side remediates the interactive response information based on user private data included in the user interactive information and responds to the user based on the remediated information; in this way, the disclosure provides a high-quality, personalized, intelligent interactive solution while protecting user privacy, which not only enhances response accuracy, but also ensures that the user private data are only kept at the smart device side, so that security of user privacy is guaranteed.

### BRIEF DESCRIPTION OF THE DRAWINGS

To illustrate the technical solutions of the disclosure or in conventional technologies more clearly, the drawings referred to in the embodiments or prior art will be introduced briefly *infra.* Apparently, the drawings illustrated below are only some embodiments of the disclosure; to a person of normal skill in the art, other drawings may also be derived based on these drawings without exercise of inventive work.
Fig. 1 is a first flow diagram of a GPT model-based smart device interaction method according to the disclosure;
Fig. 2 is a second flow diagram of a GPT model-based smart device interaction method according to the disclosure;
Fig. 3 is a third flow diagram of a GPT model-based smart device interaction method according to the disclosure;
Fig. 4 is a first structural schematic diagram of a GPT model-based smart device interaction apparatus according to the disclosure;
Fig. 5 is a second structural schematic diagram of a GPT model-based smart device interaction apparatus according to the disclosure;
Fig. 6 is a third structural schematic diagram of a GPT model-based smart device interaction system according to the disclosure.

### DETAILED DESCRIPTION OF EMBODIMENTS

To make the objectives, technical solutions, and advantages of the disclosure more comprehensible, the technical solutions of the disclosure will be described clearly and comprehensively with reference to the accompanying drawings. Apparently, the embodiments described herein are only part of the embodiments of the disclosure, instead of all of them. All other embodiments derived by a person of normal skill in the art from the embodiments described herein fall within the scope of protection of the disclosure.

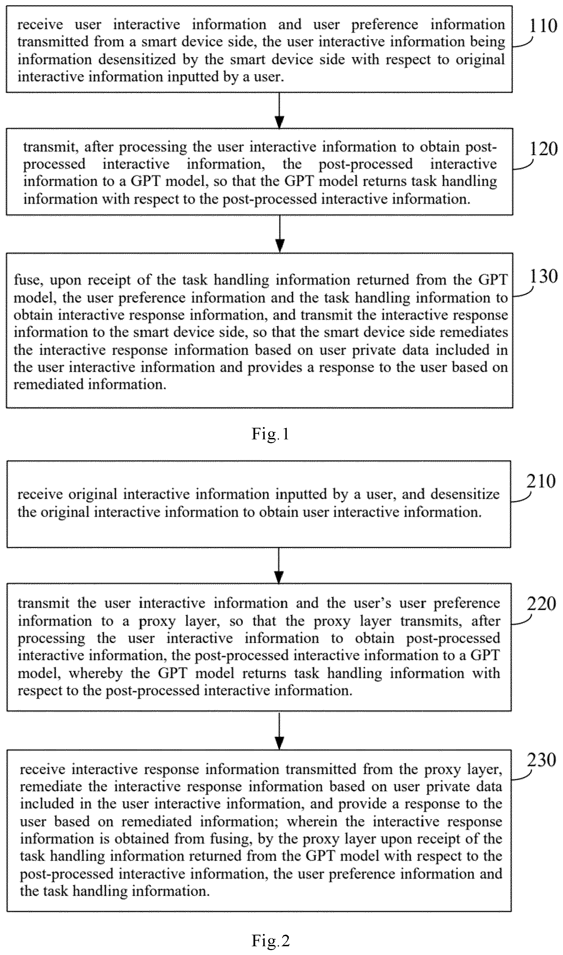

Fig. 1 s a first flow diagram of a GPT model-based smart device interaction method, the method being applied to a cloud-based proxy layer sitting between an interactive smart device side and a cloud-based GPT model, the smart device side including, but not limited to, a smart speaker, a vehicle-mounted device; as illustrated in Fig. 1, the method comprises:
Step 110: receiving user interactive information and user preference information transmitted from a smart device side, the user interactive information being information desensitized by the smart device side with respect to original interactive information inputted by a user;
Step 120: transmitting, after processing the user interactive information to obtain post-processed interactive information, the post-processed interactive information to a GPT model, so that the GPT model returns task handling information with respect to the post-processed interactive information; and
Step 130: fusing, upon receipt of the task handling information returned from the GPT model, the user preference information and the task handling information to obtain interactive response information, and transmitting the interactive response information to the smart device side, so that the smart device side remediates the interactive response information based on user private data included in the user interactive information and provides a response to the user based on remediated information.

Specifically, after a user inputs original interactive information via a human-computer interface (e.g., a speech input interface or a text input interface) provided by the smart device side, in order to prevent breach of user privacy, the smart device side may perform desensitization to the original interactive information by replacing data associated with user privacy (e.g., name, correspondence, and specific address) in the original interactive information with a preset symbol (e.g., "*"), thereby obtaining user interactive information corresponding to the original interactive information. Afterwards, the smart device side acquires user preference information of the user, the user preference information being derived by profiling the user based on the user's various kinds of interactive behaviors at the smart device side (which may be interactive behaviors at the locality of the smart device side and may also be interactive behaviors synchronized from a mobile application which is installed at the smart device side and linked to the user's mobile phone). The smart device side transmits both the user preference information and the user interactive information to the cloud-based proxy layer. The cloud-based proxy layer here at least includes a prompt proxy and a response proxy.

The prompt proxy, after receiving the user interactive information and the user preference information transmitted from the smart device side, may process the user interactive information to obtain post-processed interactive information. A processing mode may be predefined for the prompt proxy; the user interactive information and the user preference information may be consolidated according to the processing mode to form the post-processed interactive information, so that after the post-processed interactive information is transmitted to a GPT model on cloud, the GPT model may perform intent recognition and task breakdown based on the post-processed interactive information, rather than directly providing feedback with respect to the user interactive information. In this implementation, the processing mode may be obtained by testing depending on a specific type of the GPT model; for example, different prompts may be set manually and tested one by one, whereby a prompt satisfying a corresponding interaction demand (i.e., obtaining a task handling manner) may be obtained. The embodiments of the disclosure have no specific limitations thereto. For example, in a case that the user interactive information is of a an instruction control class, the GPT model may perform intent recognition and task breakdown based on the post-processed interactive information and then return task handling information indicative of steps of executing a corresponding instruction; for example, in a case that the instruction indicated by the user interactive information is ordering a lunch delivery, the GPT model may return task handling information indicative of processing steps including selecting a delivery platform, selecting to-be-ordered food, and confirming contact information and address, rather than directly executing the instruction of ordering food delivery. In a case that the user interactive information is of an information recommendation class, the GPT model may perform intent recognition and task breakdown based on the post-processed interactive information and then return task handling information indicative of steps of obtaining the corresponding information; for example, if to-be-recommended information indicated by the user interactive information is restaurants near home, the GPT model may return task handling information indicative of processing steps including selecting a dining area based on home address and selecting a restaurant style, rather than directly returning a selected restaurant. It is seen that the task handling information returned by the GPT model indicates a manner of handling the user interactive information.

The response proxy, after receiving the task handling information returned from the GPT model with respect to the post-processed interactive information, may fuse the user preference information and the task handling information to obtain interactive response information more aligned with user demands and preferences, which enhances interactive experience of the user, and transmit the interactive response information to the smart device side. The smart device side remediates the interactive response information based on user private data included in the user interactive information and provides a response to the user based on the remediated information; this enhances response accuracy and also ensures that the user private data are only kept at the smart device side, thereby guaranteeing security of user privacy.

In some embodiments, in a case that the user interactive information is of an instruction control class, the response proxy, upon fusing the user preference information and task handling information to obtain the interactive response information with respect to the user interactive information, may perform matching between respective nouns in the task handling information and respective preference labels in the user preference information, thereby obtaining the preference labels matching the nouns in the task handling information. In this implementation, any noun, if its similarities to all of the preference labels are lower than a preset threshold, is counted as not having a matching preference label; and any noun, if its similarity to a preference label is not only higher than its similarities to all other preference labels and but also higher than the preset threshold, is counted as matching with the preference label. Corresponding nouns in the task handling information are replaced based on label values of the preference labels matching the respective nouns in the task handling information, whereby interactive response information with respect to the user interactive information is obtained. Upon receipt of the interactive response information, the smart device side may supplement and complete relevant portions (e.g., address information, correspondence, etc.) of the interactive response information based on the user private data included in the user interactive information to thereby obtain remediated handling information, and invoke a local interpreter to execute the remediated handling information to implement a response to the user. In this implementation, a local GPT model at the smart device side may be applied to analyze the interactive response information and the user private data so as to determine a to-be-supplemented portion in the interactive response information, and then supplement the portion based on the user private data.

In some other embodiments, in a case that the user interactive information is of an information recommendation class, the response proxy, upon fusing the user preference information and the task handling information to obtain interactive response information with respect to the user interactive information, may perform matching between respective nouns in the task handling information and respective preference labels in the user preference information to obtain preference labels matching the nouns in the task handling information. Then, corresponding nouns in the task handling information are replaced based on label values of the preference labels matching respective nouns in the task handling information, thereby obtaining complete task handling information. Next, the response proxy directly performs the steps indicated in the complete task handling information to obtain the interactive response information with respect to the user interactive information. The smart device side, upon receipt of the interactive response information, may filter the interactive response information based on the user private data included in the user interactive information (e.g., filtering out restaurants within a smaller distance range based on the user's home address) to obtain filtered response information, and return the filtered response information to the user, whereby a response to the user is implemented.

Based on any of the example embodiments described *supra,* upon transmitting the post-processed interactive information to the GPT model, the prompt proxy may perform vectorization to the post-processed interactive information to thereby obtain a post-processed interactive vector, and then search, based on the post-processed interactive vector, in knowledge bases of various domains, wherein domain knowledge of respective domains as well as respective domain knowledge vectors of the domain knowledge are stored in the knowledge bases of the various domains. The vector-based search allows for determining the domain knowledge matching the post-processed interactive vector in the knowledge bases of the various domains as well as the domain knowledge vector of the matching domain knowledge. Then, the post-processed interactive vector and the domain knowledge vector of the matching domain knowledge are concatenated to obtain a fused query vector. The fused query vector is transmitted to the GPT model. By concatenating and fusing the post-processed interactive vector of the post-processed interactive information with the domain knowledge vector of the matching domain knowledge and then transmitting the fused query vector to the GPT model, it facilitates the GPT model to understand the true meaning of the post-processed interactive information, thereby enhancing accuracy of the interactive response.

In addition, the fused query vector may be transmitted to a plurality of GPT models, whereby task handling information returned from the plurality of GPT models with respect to the post-processed interactive information is obtained; then, optimal task handling information is filtered out from the task handling information returned from the plurality of GPT models with respect to the post-processed interactive information; or, the optimized handling information is obtained by fusing the task handling information returned from the plurality of GPT models. In this implementation, interactive response information with respect to the user interactive information is obtained by fusing the optimized handling information with the user preference information, i.e., the interactive response information is obtained by fusing the user preference information with the task handling information, the response proxy may fuse the optimized handling information, which is obtained from filtering or fusing the task handling information returned from the plurality of GPT models, with the user preference information, thereby obtaining the interactive response information.

Based on any of the embodiments described *supra,* in order to enhance data processing capacities of the prompt proxy and the response proxy of the proxy layer, the proxy layer (the prompt proxy and the response proxy) may be subjected to reinforcement learning based on steps below:
firstly, an initial model corresponding to the prompt proxy of the proxy layer and an initial model corresponding to the response proxy of the proxy layer are built based on a pretrained text generation model, respectively, which utilizes text understanding and text generation features of an existing text generation model (e.g., a GPT model). In this implementation, the text generation model adopted by the prompt proxy and the text generation model adopted by the response proxy may be same or different; the embodiments of the disclosure have no limitations thereto. Then, sample input information collected is inputted into the initial model of the prompt proxy and the initial model of the response proxy, respectively, to obtain respective test output information outputted by the initial models. It is noted that, the sample input information corresponding to the prompt proxy is different from the sample input information corresponding to the response proxy; for the prompt proxy, its corresponding sample input information may be user interactive information and the processing mode thereof; and for the response proxy, its corresponding sample input information may be user preference information and the task handling information. The text output information outputted based on respective initial models may be scored, and based on respective scores of the test output information, model losses are computed, so that by reversely adjusting the model parameters of respective initial models, the respective initial models is finely tuned to obtain a trained prompt proxy and a trained response proxy, respectively. In addition, accurate sample output information may be set for the sample input information of the prompt proxy and for the sample input information of the response proxy, respectively; then, a difference between the sample output information and the test output information for the prompt proxy, and a difference between the sample output information and the test output information for the response proxy are computed, respectively, so that the model loss for the prompt proxy and the model loss for the response proxy are computed based on the corresponding differences, respectively; the model parameters of the initial models are reversely adjusted based on the model losses, respectively, to realize fine tuning of the respective initial models, thereby obtaining the trained prompt proxy and the trained response proxy, respectively.

According to the method described in the embodiments of the disclosure *supra,* the smart device side performs desensitization to the original interactive information inputted by the user to obtain user interactive information, and transmits the user interactive information together with the user preference information to the proxy layer; the prompt proxy of the proxy layer processes the user interactive information to obtain post-processed interactive information and then transmits the post-processed interactive information to the GPT model, so that the GPT model performs intent recognition and task breakdown based on the post-processed interactive information and returns task handling information with respect to the post-processed interactive information; the response proxy, upon receipt of the task handling information returned from the GPT model with respect to the post-processed interactive information, fuses the user preference information and the task handling information to obtain interactive response information with respect to the user interactive information, and then transmits the interactive response information to the smart device side; next, the smart device side remediates the interactive response information based on user private data included in the user interactive information and provides a response to the user based on the remediated information; in this way, response accuracy is enhanced while ensuring that the user private data are only kept at the smart device side, whereby security of user privacy is guaranteed.

Fig. 2 is a second flow diagram of a GPT model-based smart device interaction method, the method being applied to a smart device side; as illustrated in Fig. 2, the method comprises:
Step 210: receiving original interactive information inputted by a user, and desensitizing the original interactive information to obtain user interactive information;
Step 220: transmitting the user interactive information and the user's user preference information to a proxy layer, so that the proxy layer transmits, after processing the user interactive information to obtain post-processed interactive information, the post-processed interactive information to a GPT model, whereby the GPT model returns task handling information with respect to the post-processed interactive information; and
Step 230: receiving interactive response information transmitted from the proxy layer, remediating the interactive response information based on user private data included in the user interactive information, and providing a response to the user based on remediated information; wherein the interactive response information is obtained from fusing, by the proxy layer upon receipt of the task handling information returned from the GPT model with respect to the post-processed interactive information, the user preference information and the task handling information.

According to the method described in the embodiments of the disclosure *supra,* the smart device side performs desensitization to the original interactive information inputted by the user to obtain user interactive information, and transmits the user interactive information together with user preference information to the proxy layer; the prompt proxy of the proxy layer processes the user interactive information to obtain post-processed interactive information and then transmits the post-processed interactive information to the GPT model, so that the GPT model performs intent recognition and task breakdown based on the post-processed interactive information and returns task handling information with respect to the post-processed interactive information; the response proxy, upon receipt of the task handling information returned from the GPT model with respect to the post-processed interactive information, fuses the user preference information and the task handling information to obtain interactive response information with respect to the user interactive information, and then transmits the interactive response information to the smart device side; next, the smart device side remediates the interactive response information based on user private data included in the user interactive information and provides a response to the user based on the remediated information; in this way, response accuracy is enhanced while ensuring that the user private data are only kept at the smart device side, whereby security of user privacy is guaranteed.

Based on any of the embodiments described *supra,* in a case that the user interactive information is of an instruction control class, the remediating the interactive response information based on user private data included in the user interactive information, and providing a response to the user based on the remediated information, specifically comprises:
remediating the interactive response information based on the user private data included in the user interactive information to obtain remediated handling information, and executing the remediated handling information to implement a response to the user;
wherein the interactive response information is obtained by the proxy layer which, after performing matching between respective nouns in the task handling information and respective preference labels in the user preference information to obtain the preference labels matching the respective nouns in the task handling information, replaces corresponding nouns in the task handling information based on label values of the preference labels matching the respective nouns in the task handling information.

Based on any of the embodiments described *supra,* in a case that the user interactive information is of an information recommendation class, the remediating the interactive response information based on user private data included in the user interactive information, and providing a response to the user based on the remediated information, specifically comprises:
filtering the interactive response information based on the user private data included in the user interactive information to obtain filtered response information, and returning the filtered response information to the user, thereby implementing a response to the user;
wherein the interactive response information is obtained by the proxy layer which, after performing matching between respective nouns in the task handling information and respective preference labels in the user preference information to obtain the preference labels matching the respective nouns in the task handling information, replaces corresponding nouns in the task handling information based on label values of the preference labels matching the respective nouns in the task handling information to obtain complete task handling information, and then executes the complete task handling information.

It is noted that the interactive manners of the smart device side as described in the embodiments above are similar to the interactive manners described in the embodiments corresponding to the proxy layer, which will not be repeated here.

Based on any of the embodiments *supra,* in a case that a speech recognition error occurs to a user's speech input, e.g., recognizing Jin-Gang-Chuan as Jin-Gang-Shan, it would be unlikely to give an accurate response in such a misrecognition circumstance; particularly, when the prompt proxy of the proxy layer performs searching in knowledge bases of various domains based on the post-processed interactive vector of the post-processed interactive information, it would also be unlikely to find relevant, desired domain knowledge, so that response accuracy cannot be guaranteed. To further improve accuracy of the interactive response, the smart device side may collect a plurality of pieces of original interactive information inputted by the user and corresponding remediated information (the remediated information is resultant from remediating, by the smart device side, the interactive response information corresponding to the concerned original interaction information based on the user private data included in the user interactive information), and records the original interactive information which corresponds to the remediated information not satisfying user expectation as a directed optimized sample, wherein whether the remediated information meets the user expectation is determined based on the user's reaction (e.g. user expression or user-inputted feedback information) to the response from the smart device side with respect to the remediated information.

Afterwards, each directed to-be-optimized sample is subjected to intent recognition to obtain a corresponding user intent. For each directed to-be-optimized sample, a type label is set, based on the user intent corresponding to the directed to-be-optimized sample, to a concerned text associated with the user intent in the directed to-be-optimized sample. For example, in a case that the user intent is to watch a movie, the type label of the concerned text may be set to "movie." By segmenting the concerned text, a keyword of the concerned text is obtained; and by searching in knowledge bases of various domains based on the keyword of the concerned text and the type label of the concerned text, domain knowledge matching the concerned text is obtained. In this implementation, domain knowledge, which has a highest relevance to the keyword in the concerned text and a type matching the type label of the concerned text, may be selected as the domain knowledge matching the concerned text. Next, an association relationship is established between the concerned text and the domain knowledge matching the concerned text.

After the association relationship is established, when a same user inputs original interactive information identical to the directed to-be-optimized sample again, the prompt proxy of the proxy layer performs searching in knowledge bases of various domains based on the post-processed interactive vector of the post-processed interactive information corresponding to the original interactive information. As the association relationship has been established between the concerned text in the directed to-be-optimized sample and the domain knowledge matching the concerned text, the domain knowledge may be immediately found through the searching. By determining the domain knowledge matching the concerned text as the domain knowledge matching the corresponding post-processed interactive vector, the GPT model may give a more accurate understanding of the user intent and the real meaning of respective segments of the text (even an erroneously inputted text) in the post-processed interactive information, whereby response accuracy is enhanced. Additionally, when a same user inputs the original interactive information identical to the directed to-be-optimized sample again, the smart device side may also provide a response based on the domain knowledge matching the concerned text, which realizes quick understanding of the user intent and quick response while avoiding over reliance on the external GPT model.

Based on any of the embodiments described *supra,* in order to further enhance user privacy protection, the user preference information, which is transmitted, together with the user interactive information, by the smart device side to the prompt proxy, may be blurred based on a real user preference. In this implementation, a real user profile label, which is associated with the user interactive information, in the real user preference may be determined based on the user interactive information, and by generalizing the associated real user profile label (e.g., spicy hot pot may be generalized as spicy food), user preference information, which includes the blurred profile label corresponding to the associated real user profile label, is obtained. After receipt of the interactive response information transmitted from the response proxy, the smart device side may perform preliminary remediation to the interactive response information based on the real user preference, and then perform secondary remediation to the preliminarily remediated interactive response information based on the user private data included in the user interaction information, whereby the remediated handling information is obtained.

In this implementation, in a case that the user interactive information is of an information recommendation class, the interactive response information may be preliminarily remediated using a local denoising model at the smart device side. The denoising model comprises four network layers. The first layer is referred to as a real preference extracting layer, which may be constructed based on a LSTM (Long Short-Term Memory) or a variant thereof, the first layer being configured to extract, based on an interactive behavior corresponding to the associated real user profile label, a hidden-layer feature of the associated real user profile label. The second layer is referred to as a blurred preference extracting layer, the structure of which is consistent with the real preference extracting layer, the second layer being configured to extract, based on an interactive behavior corresponding to the blurred profile label that corresponds to the associated real user profile label, a hidden-layer feature of the blurred profile label. The third layer is referred to as a response vector conversion layer, which may be constructed based on a fully connected network, the third layer being configured to convert a categorical distribution of respective response items (e.g., descriptive information of respective restaurants) in the interactive response information to a response vector, wherein the descriptive information in respective response items may be pre-classified by a classifier to obtain categories of respective response items, thereby obtaining their respective categorical distributions using a statistical method. The fourth layer is referred to as a remediation layer, which is a fully connected layer, the fourth layer being configured to convert the hidden layer of the associated real user profile label, the hidden layer of the blurred profile label, and a concatenated vector of the response vectors, to a new remediated categorical distribution, so that response items corresponding to the categories of a higher proportion are selected based on the remediated categorical distribution and combined to form the preliminarily remediated interactive response information.

In a case that the user interactive information is of an instruction control class, matching is performed between respective nouns in the interactive response information and the associated real user profile label in the real user preference, whereby nouns matching the associated real user profile label in the interactive response information may be obtained, and by replacing the matched nouns based on the associated real user profile label, the preliminarily remediated interactive response information is obtained.

Based on any of the embodiments described above, the smart device side may also perform directed processing to an interactive barrier scenario so as to enhance the user's interactive experience. In this implementation, feedback information inputted by the user with respect to the response may be obtained, with an image of the user when inputting the feedback information being collected; the feedback information is subjected to emotion recognition to obtain an emotion type of the feedback information; the image of the user when inputting the feedback information is subjected to expression recognition, obtaining an expression type of the user when inputting the feedback information. In a case that the feedback information includes a negative keyword, the emotion type of the feedback information is a negative emotion, or the expression type of the user when inputting the feedback information is a negative expression, it is determined that an interactive barrier occurs currently. In a case that the interactive barrier occurs currently, respective pieces of historical response information corresponding to the user is obtained, so as to search in the respective pieces of historical response information to obtain the piece of historical response information matching the original interactive information, and then a response is provided based on the piece of historical response information matching the original interactive information.

Based on any of the embodiments described *supra,* the user likely encounters an exceptional circumstance such as slow network or even network outage in an interactive scenario, e.g., passing through a stretch of road such as a tunnel where no network connection is available or the signal is weak. In this scenario, some basic interactive features may be provided to the user for off-line use; therefore, a local GPT may be deployed at the smart device side, which may perform inference directly using the local computing power to submit some simple responses. In this implementation, the current network status type may be determined, and in a case of poor network or network outage, the user interactive information and the user preference information of the user are transmitted to the locally deployed local GPT model, whereby local response information returned from the local GPT model is obtained, and a response is provided to the user based on the local response information. Here, since the smart device side has a limited computing power, the locally deployed local GPT model may be obtained by subjecting a large-scale GPT model (e.g., LLaMA-6B) to quantized model compression. The following quantized compression methodologies may be adopted to realize model compression and optimization:
1. Model parameter Optimization: the coefficient of floating-point numbers may be compressed from float32 to int8, so as to reduce model parameters by area mapping. This approach allows for converting the model from a fp32 status requiring 24GB memory to an int8 status only requiring 6GB state, reducing the required FLOPs (floating point operations) to about 1/4 of the original;
2. Gradient descent optimization: next, the model parameters may be further optimized by gradient descent.
3. AdamW optimizer: the AdamW optimizer requires a memory of 6B x 2 bytes = 12GB;
4. CUDA kernel: the CUDA kernel occupies a memory of 1.3GB;
5. Mixed precision optimization: the mixed precision optimization approach may further improve computation efficiency and reduce memory occupation;
6. LoRA-based higher-order matrix conversion: the Lora-based higher-order matrix technology may be applied to convert a higher-order matrix into a dot product of two lower-order matrices, thereby reducing memory occupation.

Generally, the optimization methodologies noted *supra* may control the memory requirement of an int8, LLaMA-6B model to about 25.3GB. Meanwhile, 4-bit quantization of weight, as well as shared scale and zero point, may be used to minimize accurate loss.

It is noted that, the quantized model compression methodologies described *supra* are only an option; model compression approaches such as model pruning may also be applied in constructing the local GPT model. Embodiments of the disclosure have no limitations thereto.

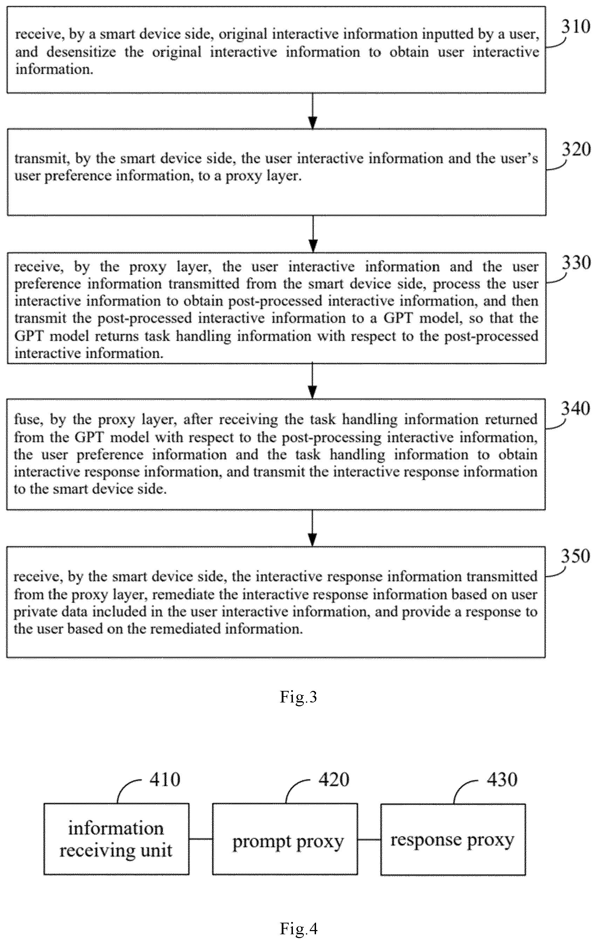

Fig. 3 is a third flow diagram of a GPT model-based smart device interaction method. As illustrated in Fig. 3, the method comprises:
Step 310: receiving, by a smart device side, original interactive information inputted by a user, and desensitizing the original interactive information to obtain user interactive information;
Step 320: transmitting, by the smart device side, the user interactive information and the user's user preference information, to a proxy layer;
Step 330: receiving, by the proxy layer, the user interactive information and the user preference information transmitted from the smart device side, processing the user interactive information to obtain post-processed interactive information, and then transmitting the post-processed interactive information to a GPT model, so that the GPT model returns task handling information with respect to the post-processed interactive information;
Step 340: fusing, by the proxy layer, after receiving the task handling information returned from the GPT model with respect to the post-processing interactive information, the user preference information and the task handling information to obtain interactive response information, and transmitting the interactive response information to the smart device side; and
Step 350: receiving, by the smart device side, the interactive response information transmitted from the proxy layer, remediating the interactive response information based on user private data included in the user interactive information, and providing a response to the user based on the remediated information.

It is noted that, the interactive manner described in this embodiment is similar to the interactive manner described in the embodiments corresponding to the proxy layer and the interactive manner described in the embodiments corresponding to the smart device side, respectively, which will not be repeated here.

According to the method described in the embodiments of the disclosure *supra,* the smart device side performs desensitization to the original interactive information inputted by the user to obtain user interactive information, and transmits the user interactive information together with user preference information to the proxy layer; the prompt proxy of the proxy layer processes the user interactive information to obtain post-processed interactive information and then transmits the post-processed interactive information to the GPT model, so that the GPT model performs intent recognition and task breakdown based on the post-processed interactive information and returns task handling information with respect to the post-processed interactive information; the response proxy, upon receipt of the task handling information returned from the GPT model with respect to the post-processed interactive information, fuses the user preference information and the task handling information to obtain interactive response information with respect to the user interactive information, and then transmits the interactive response information to the smart device side; next, the smart device side remediates the interactive response information based on user private data included in the user interactive information and responds to the user based on the remediated information; in this way, response accuracy is enhanced while ensuring that the user private data are only kept at the smart device side, whereby security of user privacy is guaranteed.

Hereinafter, apparatuses for GPT model-based smart device interaction according to the disclosure will be described. The apparatuses for GPT model-based smart device interaction described *supra* and the methods of GPT model-based smart device interaction described *infra* may be mutually referenced.

Based on any of the embodiments described *supra,* Fig. 4 illustrates a first structural schematic diagram of a GPT model-based smart device interaction apparatus according to the disclosure, which is deployed at the proxy layer; as illustrated in Fig. 4, the apparatus comprises:
an information receiving unit 410 configured to receive user interactive information and user preference information transmitted from a smart device side, the user interactive information being information desensitized by the smart device side with respect to original interactive information inputted by a user;
a prompt proxy 420 configured to transmit, after processing the user interactive information to obtain post-processed interactive information, the post-processed interactive information to a GPT model, so that the GPT model returns task handling information with respect to the post-processed interactive information; and
a response proxy 430 configured to fuse, upon receipt of the task handling information returned from the GPT model, the user preference information and the task handling information to obtain interactive response information, and transmit the interactive response information to the smart device side, so that the smart device side remediates the interactive response information based on user private data included in the user interactive information and provides a response to the user based on remediated information.

Based on any of the embodiments described *supra,* in a case that the user interactive information is of an instruction control class, the fusing the user preference information and the task handling information to obtain interactive response information specifically comprises:
matching between respective nouns in the task handling information and respective preference labels in the user preference information to obtain the preference labels matching the respective nouns in the task handling information; and
replacing, based on label values of the preference labels matching the respective nouns in the task handling information, corresponding nouns in the task handling information to obtain the interactive response information; wherein the smart device side, upon receipt of the interactive response information, remediates the interactive response information based on the user private data included in the user interactive information to obtain remediated handling information and executes the remediated handling information to implement the response to the user.

Based on any of the embodiments described *supra,* in a case that the user interactive information is of an information recommendation class, the replacing, based on label values of the preference labels matching the respective nouns in the task handling information, corresponding nouns in the task handling information to obtain the interactive response information with respect to the user interactive information, specifically comprises:
performing matching between respective nouns in the task handling information and respective preference labels in the user preference information to obtain the preference labels matching the nouns in the task handling information;
replacing corresponding nouns in the task handling information based on label values of the preference labels matching respective nouns in the task handling information, thereby obtaining complete task handling information; and
executing the complete task handling information to obtain the interactive response information with respect to the user interactive information; wherein the smart device side, upon receipt of the interactive response information, filters the interactive response information based on the user private data included in the user interactive information to obtain filtered response information, and returns the filtered response information to the user, whereby a response to the user is implemented.

Based on any of the embodiments described *supra,* the transmitting the post-processed interactive information to a GPT model specifically comprises:
vectorizing the post-processed interactive information to obtain a post-processed interactive vector;
searching, based on the post-processed interactive vector, in knowledge bases of respective domains to determine domain knowledge matching the post-processed interactive vector from within the knowledge bases of the respective domains and a domain knowledge vector of the matching domain knowledge; and
concatenating the post-processed interactive vector and the domain knowledge vector of the matching domain knowledge to obtain a fused query vector, and transmitting the fused query vector to the GPT model.

Based on any of the embodiments described *supra,* the transmitting the fused query vector to the GPT model specifically comprises:
transmitting the fused query vector to a plurality of GPT models to obtain task handling information returned from the plurality of GPT models with respect to the post-processed interactive information; and
fusing or filtering the task handling information returned from the plurality of GPT models with respect to the post-processed interactive information to obtain optimized handling information, the optimized handling information being fused with the user preference information to obtain the interactive response information.

Based on any of the embodiments described *supra,* the proxy layer is constructed by:
building an initial model based on a pre-trained text generation model;
inputting sample input information to the initial model to obtain test output information outputted by the initial model; and
finely tuning the initial model based on a score of the test output information or based on a difference between the test output information and the sample output information, thereby obtaining the proxy layer.

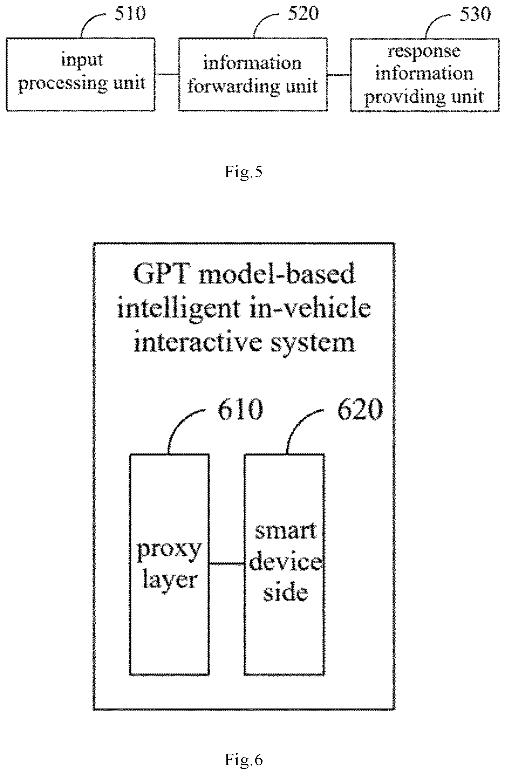

Based on any of the embodiments described *supra,* Fig. 5 illustrates a second structural schematic diagram of a GPT model-based smart device interaction apparatus according to the disclosure, the apparatus being deployed at a smart device side; as illustrated in Fig. 5, the apparatus comprises:
an input processing unit 510 configured to receive original interactive information inputted by a user, and desensitize the original interactive information to obtain user interactive information;
an information forwarding unit 520 configured to transmit the user interactive information and the user's user preference information to a proxy layer, so that the proxy layer transmits, after processing the user interactive information to obtain post-processed interactive information, the post-processed interactive information to a GPT model, whereby the GPT model returns task handling information with respect to the post-processed interactive information; and
a response information providing unit 530 configured to receive interactive response information transmitted from the proxy layer, remediate the interactive response information based on user private data included in the user interactive information, and provide a response to the user based on remediated information; wherein the interactive response information is obtained from fusing, by the proxy layer upon receipt of the task handling information returned from the GPT model with respect to the post-processed interactive information, the user preference information and the task handling information.

Based on any of the embodiments described *supra,* in a case that the user interactive information is of an instruction control class, the remediating the interactive response information based on user private data included in the user interactive information, and providing a response to the user based on remediated information, specifically comprises:
remediating the interactive response information based on the user private data included in the user interactive information to obtain remediated handling information, and executing the remediated handling information to implement a response to the user;
wherein the interactive response information is obtained by the proxy layer which, after performing matching between respective nouns in the task handling information and respective preference labels in the user preference information to obtain the preference labels matching the respective nouns in the task handling information, replaces corresponding nouns in the task handling information based on label values of the preference labels matching the respective nouns in the task handling information.

Based on any of the embodiments described *supra,* in a case that the user interactive information is of an information recommendation class, remediating the interactive response information based on user private data included in the user interactive information, and providing a response to the user based on remediated information, specifically comprises:
filtering the interactive response information based on the user private data included in the user interactive information to obtain filtered response information, and returning the filtered response information to the user, thereby implementing a response to the user;
wherein the interactive response information is obtained by the proxy layer which, after performing matching between respective nouns in the task handling information and respective preference labels in the user preference information to obtain the preference labels matching the respective nouns in the task handling information, replaces corresponding nouns in the task handling information based on label values of the preference labels matching the respective nouns in the task handling information to obtain complete task handling information, and then executes the complete task handling information.

Based on any of the embodiments described *supra,* the apparatus further comprises an optimizing unit configured to:
collect a plurality of pieces of original interactive information inputted by the user and corresponding remediated information, and record the original interactive information, which corresponds to the remediated information not meeting the user's expectation, as a directed to-be-optimized sample;
perform intent recognition with respect to the directed to-be-optimized sample to obtain a user intent corresponding to the directed to-be-optimized sample, and set, based on the user intent, a type label for a concerned text associated with the user intent in the directed to-be-optimized sample;
perform word segmentation to the concerned text to obtain a keyword of the concerned text, and search, based on the keyword of the concerned text and the type label of the concerned text, in knowledge bases of respective domains to obtain domain knowledge matching the concerned text;
establish an association relationship between the concerned text and the domain knowledge matching the concerned text, so that after a same user inputs original interactive information identical to the directed to-be-optimized sample again, searching is performed, based on post-processed interactive vector of the post-processed interactive information corresponding to the original interactive information, in the knowledge bases of respective domains, wherein the domain knowledge matching the concerned text is determined as the domain knowledge matching the corresponding post-processed interactive vector; or, a response to the original interactive information is provided based on the domain knowledge matching the concerned text.

Based on any of the embodiments described *supra,* the apparatus further comprises an interaction barrier handling unit configured to:
obtain feedback information inputted by the user with respect to the response and collect an image of the user when inputting the feedback information;
perform emotion recognition with respect to the feedback information to obtain an emotion type of the feedback information;
perform expression recognition with respect to the image of the user when inputting the feedback information to obtain an expression type of the user when inputting the feedback information;
determine, in a case that the feedback information includes a negative keyword, the emotion type of the feedback information is a negative emotion, or the expression type of the user when inputting the feedback information is a negative expression, that an interaction barrier occurs currently;
obtain, in a case that the interaction barrier occurs currently, respective pieces of historical prompt-response information corresponding to the user, search, in the respective pieces of historical prompt-response information, historical prompt-response information matching the original interactive information, and provide a response based on the historical prompt-response information matching the original interactive information.

Based on any of the embodiments described *supra,* the apparatus further comprises a local processing unit configured to:
determine a current network status type, transmit, in a case that the network status type is poor network connectivity or network outage, the user interactive information and the user's user preference information to a locally deployed local GPT model to obtain local response information returned from the local GPT model, and provide a response to the user based on the local response information.

Based on any of the embodiments described *supra,* the local GPT model is obtained by performing quantized model compression to a sample GPT model.

Based on any of the embodiments described *supra,* Fig. 6 illustrates a third structural schematic diagram of a GPT model-based smart device interaction system according to the disclosure. As illustrated in Fig. 6, the system comprises:
a proxy layer 610 and a smart device side 620;
wherein on the proxy layer 610 is deployed the GPT model-based smart device interaction apparatus as provided in the corresponding embodiments described *supra;* and on the smart device side 620 is deployed the GPT model-based smart device interaction apparatus as provided in the corresponding embodiments described *supra.*

The apparatus embodiments described *supra* are only schematic, wherein the units described as discrete components may be physically separated or may not be physically separated; the components illustrated as units may be physical units or may not be physical units, which may be located at a same place or may be distributed on a plurality of network units. Part or all of the modules may be selected depending on actual circumstances to achieve the objectives of the solutions in the embodiments of the disclosure. A person of normal skill in the art may understand and implement the disclosure without exercise of inventive efforts.

Through the description of the embodiments above, those skilled in the art may clearly understand that the various embodiments may be implemented by software with a necessary general hardware platform, which, of course, may also be implemented by hardware. Based on such understanding, the substance of the technical solution or the portion of the technical solution contributing to the prior art may be embodied as a software product; the computer software product may be stored in a computer-readable storage medium, e.g., ROM/RAM, magnetic disc, and optical disc, which store a plurality of instructions, causing a computer device (which may be a personal computer, a server, or a network device, etc.) to execute the method described in various embodiments or some portions of the embodiments.

Finally, it is noted that, the embodiments described *supra* are provided only for illustration the technical solutions of the disclosure, rather than limiting them; although the disclosure has been described in detail with reference to the embodiments above, a person of normal skill in the art should understand that, the technical solutions described in the various embodiments above may be modified, or part of the technical features described therein may be equivalently substituted, while these amendments or substitutions do not cause the substance of the corresponding technical solutions to depart from the spirit and scope of the technical solutions of various embodiments of the disclosure.

## Claims

1. A GPT model-based smart device interaction method, which is applied at a proxy layer, comprising:
receiving user interactive information and user preference information transmitted from a smart device side, the user interactive information being information desensitized by the smart device side with respect to original interactive information inputted by a user;
transmitting, after processing the user interactive information to obtain post-processed interactive information, the post-processed interactive information to a GPT model, so that the GPT model returns task handling information with respect to the post-processed interactive information; and
fusing, upon receipt of the task handling information returned from the GPT model, the user preference information and the task handling information to obtain interactive response information, and transmitting the interactive response information to the smart device side, so that the smart device side remediates the interactive response information based on user private data included in the user interactive information and provides a response to the user based on remediated information.

2. The GPT model-based smart device interaction method of claim 1, wherein the fusing the user preference information and the task handling information to obtain interactive response information specifically comprises:
matching between respective nouns in the task handling information and respective preference labels in the user preference information to obtain the preference labels matching the respective nouns in the task handling information; and
replacing, based on label values of the preference labels matching the respective nouns in the task handling information, corresponding nouns in the task handling information to obtain the interactive response information; wherein the smart device side, upon receipt of the interactive response information, remediates the interactive response information based on the user private data included in the user interactive information to obtain remediated handling information and executes the remediated handling information to implement the response to the user.

3. The GPT model-based smart device interaction method of claim 1 or 2, wherein the transmitting the post-processed interactive information to a GPT model specifically comprises:
vectorizing the post-processed interactive information to obtain a post-processed interactive vector;
searching, based on the post-processed interactive vector, in knowledge bases of respective domains to determine domain knowledge matching the post-processed interactive vector from within the knowledge bases of the respective domains and a domain knowledge vector of the matching domain knowledge; and
concatenating the post-processed interactive vector and the domain knowledge vector of the matching domain knowledge to obtain a fused query vector, and transmitting the fused query vector to the GPT model.

4. The GPT model-based smart device interaction method of claim 3, wherein the transmitting the fused query vector to the GPT model specifically comprises:
transmitting the fused query vector to a plurality of GPT models to obtain task handling information returned from the plurality of GPT models with respect to the post-processed interactive information; and
fusing or filtering the task handling information returned from the plurality of GPT models with respect to the post-processed interactive information to obtain optimized handling information, the optimized handling information being fused with the user preference information to obtain the interactive response information.

5. The GPT model-based smart device interaction method of claim 1 or 2, wherein the proxy layer is constructed by:
building an initial model based on a pre-trained text generation model;
inputting sample input information to the initial model to obtain test output information outputted by the initial model; and
finely tuning the initial model based on a score of the test output information or based on a difference between the test output information and the sample output information, thereby obtaining the proxy layer.

6. A GPT model-based smart device interaction method, which is applied at a smart device side, comprising:
receiving original interactive information inputted by a user, and desensitizing the original interactive information to obtain user interactive information;
transmitting the user interactive information and the user's user preference information to a proxy layer, so that the proxy layer transmits, after processing the user interactive information to obtain post-processed interactive information, the post-processed interactive information to a GPT model, whereby the GPT model returns task handling information with respect to the post-processed interactive information; and
receiving interactive response information transmitted from the proxy layer, remediating the interactive response information based on user private data included in the user interactive information, and providing a response to the user based on remediated information; wherein the interactive response information is obtained from fusing, by the proxy layer upon receipt of the task handling information returned from the GPT model with respect to the post-processed interactive information, the user preference information and the task handling information.

7. The GPT model-based smart device interaction method of claim 6, wherein the remediating the interactive response information based on user private data included in the user interactive information, and providing a response to the user based on remediated information, specifically comprises:
remediating the interactive response information based on the user private data included in the user interactive information to obtain remediated handling information, and executing the remediated handling information to implement a response to the user;
wherein the interactive response information is obtained by the proxy layer which, after performing matching between respective nouns in the task handling information and respective preference labels in the user preference information to obtain the preference labels matching the respective nouns in the task handling information, replaces corresponding nouns in the task handling information based on label values of the preference labels matching the respective nouns in the task handling information.

8. The GPT model-based smart device interaction method of claim 6 or 7, further comprising:
collecting a plurality of pieces of original interactive information inputted by the user and corresponding remediated information, and recording the original interactive information, which corresponds to the remediated information not meeting the user's expectation, as a directed to-be-optimized sample;
performing intent recognition with respect to the directed to-be-optimized sample to obtain a user intent corresponding to the directed to-be-optimized sample, and setting, based on the user intent, a type label for a concerned text associated with the user intent in the directed to-be-optimized sample;
performing word segmentation to the concerned text to obtain a keyword of the concerned text, and searching, based on the keyword of the concerned text and the type label of the concerned text, in knowledge bases of respective domains to obtain domain knowledge matching the concerned text; and
establishing an association relationship between the concerned text and the domain knowledge matching the concerned text, so that after a same user inputs original interactive information identical to the directed to-be-optimized sample again, searching is performed, based on post-processed interactive vector of the post-processed interactive information corresponding to the original interactive information, in the knowledge bases of respective domains, wherein the domain knowledge matching the concerned text is determined as the domain knowledge matching the corresponding post-processed interactive vector; or, a response to the original interactive information is provided based on the domain knowledge matching the concerned text.

9. The GPT model-based smart device interaction method of claim 6 or 7, further comprising:
obtaining feedback information inputted by the user with respect to the response and collecting an image of the user when inputting the feedback information;
performing emotion recognition with respect to the feedback information to obtain an emotion type of the feedback information;
performing expression recognition with respect to the image of the user when inputting the feedback information to obtain an expression type of the user when inputting the feedback information;
determining, in a case that the feedback information includes a negative keyword, the emotion type of the feedback information is a negative emotion, or the expression type of the user when inputting the feedback information is a negative expression, that an interaction barrier occurs currently; and
obtaining, in a case that the interaction barrier occurs currently, respective pieces of historical prompt-response information corresponding to the user, searching, in the respective pieces of historical prompt-response information, historical prompt-response information matching the original interactive information, and providing a response based on the historical prompt-response information matching the original interactive information.

10. The GPT model-based smart device interaction method of claim 6 or 7, further comprising:
determining a current network status type, transmitting, in a case that the network status type is poor network connectivity or network outage, the user interactive information and the user's user preference information to a locally deployed local GPT model to obtain local response information returned from the local GPT model, and providing a response to the user based on the local response information.

11. The GPT model-based smart device interaction method of claim 10, wherein the local GPT model is obtained by performing quantized model compression to a sample GPT model.

12. A GPT model-based smart device interaction method, comprising:
receiving, by a smart device side, original interactive information inputted by a user, and desensitizing the original interactive information to obtain user interactive information;
transmitting, by the smart device side, the user interactive information and the user's user preference information, to a proxy layer;
receiving, by the proxy layer, the user interactive information and the user preference information transmitted from the smart device side, processing the user interactive information to obtain post-processed interactive information, and then transmitting the post-processed interactive information to a GPT model, so that the GPT model returns task handling information with respect to the post-processed interactive information;
fusing, by the proxy layer, after receiving the task handling information returned from the GPT model with respect to the post-processing interactive information, the user preference information and the task handling information to obtain interactive response information, and transmitting the interactive response information to the smart device side; and
receiving, by the smart device side, the interactive response information transmitted from the proxy layer, remediating the interactive response information based on user private data included in the user interactive information, and providing a response to the user based on the remediated information.

13. A GPT model-based smart device interaction apparatus, which is deployed at a proxy layer, comprising:
an information receiving unit configured to receive user interactive information and user preference information transmitted from a smart device side, the user interactive information being information desensitized by the smart device side with respect to original interactive information inputted by a user;
a prompt proxy configured to transmit, after processing the user interactive information to obtain post-processed interactive information, the post-processed interactive information to a GPT model, so that the GPT model returns task handling information with respect to the post-processed interactive information; and
a response proxy configured to fuse, upon receipt of the task handling information returned from the GPT model, the user preference information and the task handling information to obtain interactive response information, and transmit the interactive response information to the smart device side, so that the smart device side remediates the interactive response information based on user private data included in the user interactive information and provides a response to the user based on remediated information.

14. A GPT model-based smart device interaction apparatus, which is deployed at a smart device side, comprising:
an input processing unit configured to receive original interactive information inputted by a user, and desensitize the original interactive information to obtain user interactive information;
an information forwarding unit configured to transmit the user interactive information and the user's user preference information to a proxy layer, so that the proxy layer transmits, after processing the user interactive information to obtain post-processed interactive information, the post-processed interactive information to a GPT model, whereby the GPT model returns task handling information with respect to the post-processed interactive information; and
a response information providing unit configured to receive interactive response information transmitted from the proxy layer, remediate the interactive response information based on user private data included in the user interactive information, and provide a response to the user based on remediated information; wherein the interactive response information is obtained from fusing, by the proxy layer upon receipt of the task handling information returned from the GPT model with respect to the post-processed interactive information, the user preference information and the task handling information.

15. A GPT model-based smart device interaction system, comprising a proxy layer and a smart device side:
wherein on the proxy layer is deployed the GPT model-based smart device interaction apparatus according to claim 13; and
on the smart device side is deployed the GPT model-based smart device interaction apparatus according to claim 14.
